# EUROPÄISCHE PATENTSCHRIFT

(11) **EP 2 319 300 B1**
(45) Veröffentlichungstag und Bekanntmachung des Hinweises auf die Patenterteilung: **04.03.2015**
(21) Anmeldenummer: 10187591.2
(22) Anmeldetag: 14.10.2010
(51) Int. Cl.: A01K 5/00, A01D 90/10, A01C 15/16

(54) **Zubehörteil für einen Abschiebewagen mit einer Vorrichtung zur pneumatischen Entladung von Schüttgut**
Accessory for a load push-off trailer with a device for pneumatically unloading bulk material
Accessoire pour une remorque à déchargement porté-poussé doté d'un dispositif de déchargement pneumatique de produits en vrac

(30) Priorität: 05.11.2009 DE 202009015019 U
(43) Veröffentlichungstag der Anmeldung: 11.05.2011
(73) Patentinhaber: Fliegl, Josef, 84453 Mühldorf (DE)
(72) Erfinder: Fliegl, Josef, 84453 Mühldorf (DE)
(74) Vertreter: Tetzner, Michael

(56) Entgegenhaltungen:
- EP-A1- 0 277 733
- DE-A1-102004 003 297
- DE-B- 1 175 154
- DE-U1- 9 416 478

## Beschreibung

Die Erfindung betrifft ein Zubehörteil für einen Abschiebewagen mit einer Vorrichtung zur pneumatischen Entladung von Schüttgut:
Abschiebewagen enthalten eine durch Hydraulikzylinder verschiebbare Frontwand, den sogenannten Abschiebeschlitten, und eine hochklappbare Heckwand. Sie werden vor allem in der Landwirtschaft in großem Umfang zum Transport unterschiedlichster Stoffe eingesetzt. Ein derartiger Abschiebewagen ist beispielsweise aus der DE 10 2004 003 297 A1 bekannt, wobei die Heck- bzw. Rückwand mittels eines hydraulisch betätigbaren Zylinders schwenkbar ist oder von Hand entfernt werden kann.

Es sind weiterhin bereits Schüttgut-Transportfahrzeuge bekannt, die als festen Bestandteil des Fahrzeuges Mittel zur Dosierung des zu entladenden Schüttgutes (beispielsweise Dosier- und Förderschnecken) sowie Einrichtungen zur pneumatischen Weiterförderung des Schüttgutes (etwa Fördergebläse und Zellenradschleusen) aufweisen. Hierbei handelt es sich jedoch um Spezialfahrzeuge, deren Anschaffung für den Benutzer nur dann in Betracht kommt, wenn sie ständig nur für pneumatisch zu entladende Schüttgüter eingesetzt werden sollen.

Für Lastwagen, insbesondere Kippfahrzeuge, ist schließlich eine pneumatische Schüttgut-Entladevorrichtung mit Zellenradschleuse bekannt (DE 33 13 516 A1), die Bestandteil einer austauschbaren Hinterbordwand ist, so dass der Lastwagen je nach Bedarf mit einer normalen Hinterbordwand oder für den Schüttgütertransport mit einer Hinterbordwand mit integrierter Entladevorrichtung ausgestattet werden kann.

Die EP 0 277 733 A1 beschreibt einen Abschiebewagen gemäß dem Oberbegriff des Anspruches 1, dessen Standard-Rückwand gegen einen Verteilmechanismus zur Dosierung und Förderung von zu entladendem Schüttgut austauschbar ist.

Die DE 94 16 478 U1 offenbart eine Vorrichtung zum Verteilen von Mulch im Gelände, deren Auswurfeinrichtung aus einem mittels eines regel- und steuerbaren Antriebs rotierbaren Flügelrad besteht.

Der Erfindung liegt die Aufgabe zu Grunde, den normalen, breiten Anwendungsbereich des Abschiebewagens mit vergleichsweise geringen Kosten zu erweitern.

Diese Aufgabe wird erfindungsgemäß dadurch gelöst, dass die gesamte Standard-Rückwand des Abschiebewagens gegen ein Zubehörteil auswechselbar ist, das Mittel zur Dosierung und Förderung von zu entladendem Schüttgut enthält. Das Zubehörteil enthält wenigstens eine Dosierwalze zur Lockerung und Dosierung des Schüttgutes, eine Zellenradschleuse, ein Fördergebläse zur pneumatischen Weiterförderung des Schüttgutes sowie eine Förderschnecke, die unterhalb der Dosierwalze vorgesehen ist und das zu entladende Schüttgut der Zellenradschleuse zuführt, und wobei das als Rückwand ausgebildete Zubehörteil einen U-förmigen Querschnitt aufweist, wobei die beiden Schenkel des U, zwischen denen die Dosierwalze und die Förderschnecke gelagert sind, durch ein Bodenblech verbunden sind, an dessen Unterseite das Fördergebläse und die Zellenradschleuse angeordnet sind.

Auf diese Weise kann ein bereits vorhandener Abschiebewagen mit vergleichsweise geringen Kosten durch Austausch der Standard-Rückwand gegen das erfindungsgemäße Zubehörteil zu einem pneumatisch entleerbaren Schüttgut-Abschiebewagen umgerüstet werden. Der Benutzer behält dabei die Möglichkeit, den Abschiebewagen jederzeit durch einfaches Einsetzen der Standard-Rückwand optimal für eine andere Verwendung (mit nicht pneumatischer Entladung) einzurichten.

Bei Neuanschaffung eines Abschiebewagens kann es für einen Benutzer vorteilhaft sein, außer der Standard-Rückwand auch das erfindungsgemäße Zubehörteil (mit Einrichtungen zur pneumatischen Entladung) zu erwerben, um von vornherein über vielfältige Einsatzmöglichkeiten des Abschiebewagens zu verfügen.

Abschiebewagen, die mit der erfindungsgemäßen pneumatischen Entladevorrichtung ausgerüstet sind, können für die unterschiedlichsten Schüttgüter eingesetzt werden, beispielsweise für Hackschnitzel, Holzpellets, Getreide, Futter, Dünger usw.

Diese und weitere Einzelheiten der Erfindung gehen aus der nachfolgenden Beschreibung eines in der Zeichnung veranschaulichten Ausführungsbeispiels hervor.

In der Zeichnung zeigen:
- Fig. 1: eine Perspektivansicht eines Abschiebewagens mit der erfindungsgemäßen Entladevorrichtung (von außen gesehen),
- Fig. 2: eine Perspektivansicht der Spezial-Rückwand mit der erfindungsgemäßen Entladevorrichtung (von innen gesehen).

Der Abschiebewagen 1 weist an seiner Rückseite nicht die übliche Standard-Rückwand auf, sondern eine Spezial-Rückwand 2, die die erfindungsgemäße Entladevorrichtung trägt.

Diese Entladevorrichtung enthält im wesentlichen eine Dosierwalze 3, eine Förderschnecke 4, eine Zellenradschleuse 5 sowie ein Fördergebläse 6. Alternativ aber nicht als Teil der Erfindung - je nach der Art des in erster Linie transportierten Schüttgutes - kann statt der Förderschnecke 4 auch eine zweite Dosierwalze vorgesehen werden.

Die Rückwand 2 weist einen U-förmigen Querschnitt auf, wobei die Dosierwalze 3 und die Förderschnecke 4 zwischen den beiden Schenkeln 2a, 2b der Rückwand 2 gelagert sind.

Die Schenkel 2a, 2b der Rückwand 2 sind durch ein Bodenblech 2c verbunden, an dessen Unterseite die Zellenradschleuse 5 und das Fördergebläse 6 befestigt sind. An eine Öffnung 7 im Bodenblech 2c schließt sich ein Kanal 8 an, der zur Zellenradschleuse 5 führt.

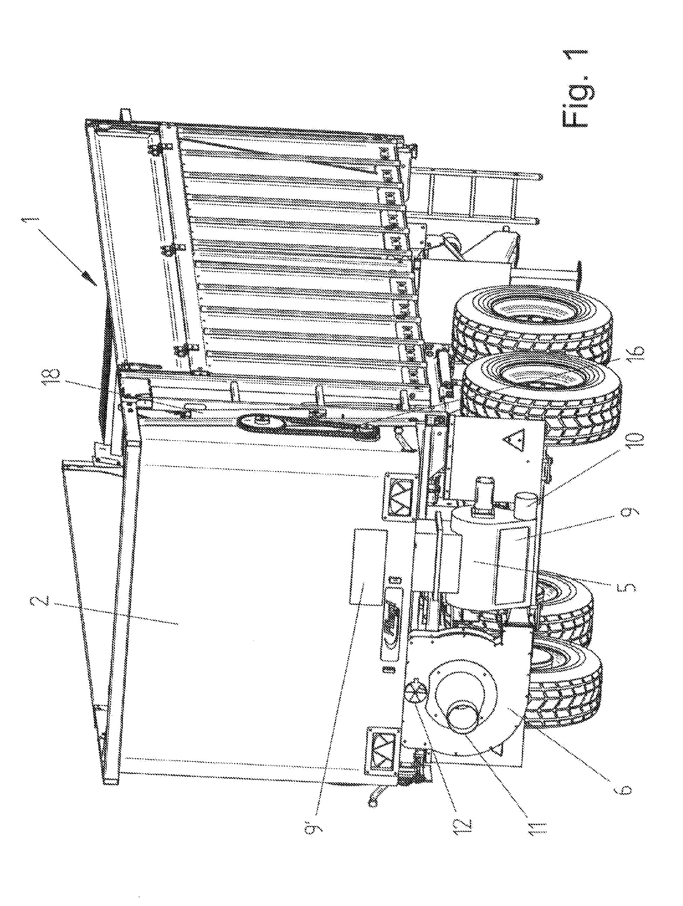

Ein mit dem druckseitigen Ausgang des Fördergebläses 6 und mit dem Ausgang der Zellenradschleuse 5 verbundener Abschnitt eines Schüttgut-Förderkanales ist mit einem Sichtfenster 9 versehen (vgl. Fig.1). Ein weiteres Sichtfenster 9' ist in der Rückwand 2 angebracht.

An einen Ausgangsstutzen 10 des genannten Schüttgut-Förderkanales wird bei der pneumatischen Entladung des Abschiebewagens ein (nicht dargestellter) flexibler Förderschlauch angeschlossen, der vorzugsweise aus durchsichtigem Material besteht, beispielsweise einen Durchmesser von 150 mm aufweist und durch Schnellkupplungen beliebig verlängert werden kann.

Ein weiterer (nicht dargestellter) Schlauch kann an einen Ansaugstutzen 11 des Fördergebläses 6 angeschlossen werden, um etwa bei der Befüllung eines Bunkers zur Verringerung der Staubemission Luft abzusaugen. Eine einstellbare Öffnung 12 im Gehäuse des Fördergebläses 6 dient zur Ansaugung von Ausgleichsluft, wenn die über den Ansaugstutzen 11 zugeführte Luft für die gewünschte Schüttgut-Förderung nicht ausreicht.

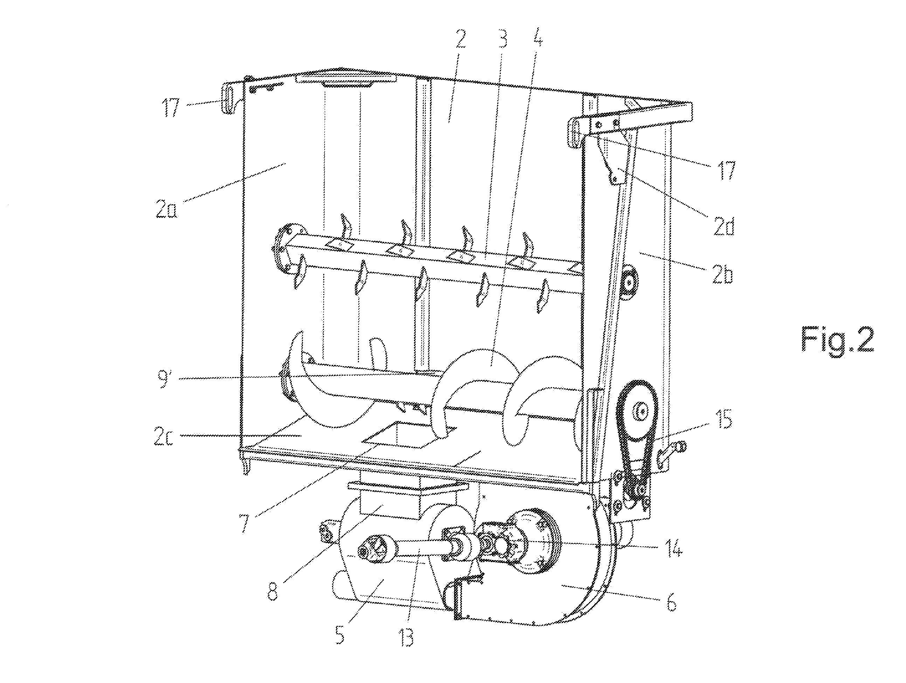

Der Antrieb des Fördergebläses 6 erfolgt vom Schlepper des Abschiebewagens über eine Gelenkwelle 13 und ein Übersetzungsgetriebe 14. Über zwei Ketten 15 (vgl. Fig.2) und 16 (vgl. Fig.1) werden die Förderschnecke 4 und die Dosierwalze 3 angetrieben.

Alternativ ist es auch ein Ölantrieb oder ein Antrieb durch einen Elektromotor möglich.

Die Funktion der Entladevorrichtung dürfte hiernach ohne weiteres verständlich sein:

Die Dosierwalze lockert das in ihrem Bereich befindliche Schüttgut auf, so dass es nach unten auf die Förderschnecke 4 fällt. Die Förderschnecke 4 fördert das Schüttgut durch die Öffnung 7 und den Kanal 8 in die Zellenradschleuse 5. Von hier gelangt das Schüttgut in den darunter befindlichen, mit dem Sichtfenster 9 versehenen Förderkanal, in dem das Schüttgut von dem durch das Fördergebläse 6 zugeführten Luftstrom erfasst wird, so dass es durch den Ausgangsstutzen 10 und den hieran angeschlossenen Förderschlauch ausgetragen und beispielsweise einem Bunker zugeführt wird. Das Fördergebläse saugt die Förderluft über den Ansaugstutzen 11 (und einen hiermit eventuell verbundenen Absaugschlauch) sowie über die einstellbare Öffnung 12 an.

Ein mobiles Steuerpult am Heck des Abschiebewagens 1 ermöglicht eine Einstellung der gewünschten Dosiermenge. Der Austrag des Schüttgutes kann durch die beiden Sichtfenster 9 und 9' gut beobachtet werden. Mittels der regulierbaren Öffnung 12 kann der Volumenstrom der Förderluft auf den optimalen Wert eingestellt werden.

Im Bedarfsfalle ist auch eine Entleerung des Abschiebewagens 1 in herkömmlicher Weise, d.h. ohne die pneumatische Entladevorrichtung möglich. Zu diesem Zweck ist die Rückwand 2 am vorderen oberen Ende der Schenkel 2a, 2b über Ösen 17 gelenkig mit den Seitenwänden des Abschiebewagens 1 verbunden. Eine hydraulische Zylinder-Kolben-Anordnung 18 ist zwischen einer Seitenwand des Abschiebewagens und einem Winkel 2d der Rückwand 2 so angeordnet, dass sich die Rückwand 2 durch Betätigung der Zylinder-Kolben-Anordnung 18 um ihre obere Anlenkung hochschwenken lässt, wonach der Abschiebewagen in herkömmlicher Weise entleert werden kann.

Darüber hinaus kann das erfindungsgemäße als Rückwand ausgebildete Zubehörteil 2 mit der pneumatischen Entladevorrichtung auf einfache Weise gegen eine Standard-Rückwand ausgewechselt werden, wenn der jeweilige Einsatzzweck des Abschiebewagens dies wünschenswert erscheinen lässt.

## Patentansprüche

1. Zubehörteil für einen Abschiebewagen, das gegen die gesamte Standard-Rückwand des Abschiebewagens auswechselbar ist, das Mittel zur Dosierung und Förderung von zu entladendem Schüttgut enthält,
**dadurch gekennzeichnet, dass** das Zubehörteil wenigstens eine Dosierwalze (3) zur Lockerung und Dosierung des Schüttgutes, eine Zellenradschleuse (5), ein Fördergebläse (6) zur pneumatischen Weiterförderung des Schüttgutes sowie eine Förderschnecke (4) enthält, die unterhalb der Dosierwalze (3) vorgesehen ist und das zu entladende Schüttgut der Zellenradschleuse (5) zuführt,
und wobei das als Rückwand (2) ausgebildete Zubehörteil einen U-förmigen Querschnitt aufweist, wobei die beiden Schenkel (2a, 2b) des U, zwischen denen die Dosierwalze (3) und die Förderschnecke (4) gelagert sind, durch ein Bodenblech (2c) verbunden sind, an dessen Unterseite das Fördergebläse (6) und die Zellenradschleuse (5) angeordnet sind.

2. Zubehörteil nach Anspruch 1, **dadurch gekennzeichnet, dass** ein mit dem druckseitigen Ausgang des Fördergebläses (6) und dem Ausgang der Zellenradschleuse (5) verbundener Abschnitt eines Schüttgut-Förderkanales mit einem Sichtfenster (9) versehen ist.

3. Zubehörteil nach Anspruch 1, **dadurch gekennzeichnet, dass** das Fördergebläse (6) mit einem Ansaugstutzen (11) zum Anschluss eines Luftabsaugschlauches sowie mit einer einstellbaren Öffnung (12) zur Ansaugung von Ausgleichsluft versehen ist.

4. Zubehörteil nach Anspruch 1, **dadurch gekennzeichnet, dass** die Dosierwalze (3), die Förderschnecke (4), die Zellenradschleuse (5) sowie das Fördergebläse (6) über die Zapfwelle eines das Zugfahrzeug des Abschiebewagens (1) bildenden Schleppers antreibbar sind.

5. Zubehörteil nach Anspruch 4, **dadurch gekennzeichnet, dass** das als Rückwand (2) ausgebildete Zubehörteil des Abschiebewagens (1) zur Entladung des Schüttgutes durch Abschieben, vorzugsweise hydraulisch vom Schlepper aus, geöffnet, vorzugsweise hochgeklappt werden kann.

## Claims

1. Accessory component for a push-off trailer, which component can replace the entire standard rear wall of the push-off trailer and which contains means for metering and conveying bulk material which is intended to be unloaded, **characterised in that** the accessory component has at least one metering roller (3) for loosening and metering the bulk material, a rotary feeder (5), a conveying fan (6) for pneumatically conveying the bulk material and a screw conveyor (4), which is provided below the metering roller (3) and which supplies the bulk material which is intended to be unloaded to the rotary feeder (5),
and wherein the accessory component which is constructed as a rear wall (2) has a U-shaped cross-section, the two members (2a, 2b) of the U between which the metering roller (3) and the screw conveyor (4) are supported being connected by means of a base sheet (2c), at the lower side of which the conveying fan (6) and the rotary feeder (5) are arranged.

2. Accessory component according to claim 1, **characterised in that** a portion of a bulk material conveying channel, which portion is connected to the pressure-side output of the conveying fan (6) and the output of the rotary feeder (5), is provided with a viewing window (9).

3. Accessory component according to claim 1, **characterised in that** the conveying fan (6) is provided with an intake nozzle (11) for the connection of an air suction hose and an adjustable opening (12) for drawing in compensation air.

4. Accessory component according to claim 1, **characterised in that** the metering roller (3), the screw conveyor (4), the rotary feeder (5) and the conveying fan (6) can be driven by means of the power take-off shaft of a tractor which forms the pulling vehicle of the push-off trailer (1).

5. Accessory component according to claim 4, **characterised in that** the accessory component of the push-off trailer (1), which component is constructed as a rear wall (2), can be opened, preferably folded upwards, in order to unload the bulk material by means of a pushing-off action, preferably hydraulically, from the tractor.

## Revendications

1. Accessoire pour une remorque à fond poussant qui est interchangeable par rapport à l'ensemble formant le panneau arrière standard de la remorque à fond poussant, accessoire qui comprend des moyens servant au dosage et au transport de produits en vrac à décharger,
**caractérisé en ce que** l'accessoire comprend au moins un rouleau doseur (3) servant au décompactage et au dosage des produits en vrac, un sas à roue cellulaire (5), un transporteur pneumatique (6) servant au transport pneumatique en continu des produits en vrac, ainsi qu'un transporteur à vis sans fin (4) qui est prévu au-dessous du rouleau doseur (3) et fournit au sas à roue cellulaire (5) les produits en vrac à décharger,
et où l'accessoire conçu comme panneau arrière (2) présente une section en forme de U, où les deux branches (2a, 2b) du U, entre lesquelles sont logés le rouleau doseur (3) et le transporteur à vis sans fin (4), sont reliées par une tôle de fond (2c) sur le dessous de laquelle sont disposés le transporteur pneumatique (6) et le sas à roue cellulaire (5).

2. Accessoire selon la revendication 1, **caractérisé en ce qu'**une section d'un canal de transport des produits en vrac est dotée d'une fenêtre de contrôle (9), ladite section étant reliée à la sortie, côté pression, du transporteur pneumatique (6) et à la sortie du sas à roue cellulaire (5).

3. Accessoire selon la revendication 1, **caractérisé en ce que** le transporteur pneumatique (6) est doté d'une tubulure d'aspiration (11) servant au raccordement d'un tuyau d'aspiration d'air, ainsi que d'une ouverture réglable (12) prévue pour l'aspiration d'air d'équilibrage.

4. Accessoire selon la revendication 1, **caractérisé en ce que** le rouleau doseur (3), le transporteur à vis sans fin (4), le sas à roue cellulaire (5) ainsi que le transporteur pneumatique (6) peuvent être entraînés par l'arbre de prise de force d'un tracteur formant le véhicule de traction de la remorque à fond poussant (1).

5. Accessoire selon la revendication 4, **caractérisé en ce que** l'accessoire de la remorque à fond poussant (1), conçu comme panneau arrière (2) et servant au déchargement des produits en vrac déversés par poussée, peut être ouvert, de préférence relevé, cela étant effectué de préférence hydrauliquement à partir du tracteur.
